# NEUE EUROPÄISCHE PATENTSCHRIFT

(11) **EP 3 045 328 B2**
(45) Veröffentlichungstag und Bekanntmachung des Hinweises auf die Entscheidung über den Einspruch: **15.03.2023**
(45) Hinweis auf die Patenterteilung: 03.04.2019
(21) Anmeldenummer: 16151064.9
(22) Anmeldetag: 13.01.2016
(51) Int. Cl.: B60D 1/06, B60D 1/48

(54) **ANHÄNGEKUPPLUNG**
TRAILER COUPLING
ATTELAGE

(30) Priorität: 14.01.2015 DE 102015100490
(43) Veröffentlichungstag der Anmeldung: 20.07.2016
(73) Patentinhaber: ACPS Automotive GmbH, 74379 Ingersheim (DE)
(72) Erfinder: Rimmelspacher, Bernhard, 76287 Rheinstetten (DE); Gentner, Wolfgang, 71711 Steinheim (DE); Kadnikov, Aleksej, 71229 Leonberg (DE)
(74) Vertreter: Hoeger, Stellrecht & Partner Patentanwälte mbB

(56) Entgegenhaltungen:
- EP-A1- 0 799 732
- EP-A1- 1 428 697
- EP-A1- 2 006 192
- EP-A1- 2 596 966
- WO-A1-2006/068479
- DE-A1-102008 012 622
- US-A- 2 944 836

## Beschreibung

Die Erfindung betrifft eine Anhängekupplung für Kraftfahrzeuge, umfassend einen mit einer Kraftfahrzeugkarosserie verbindbaren Querträger und eine Lagereinheit, welche einen Kugelhals trägt, der an einem ersten Ende mit der Lagereinheit verbunden ist und an einem zweiten Ende eine Kupplungskugel trägt, und eine die Lagereinheit tragende und mit dem Querträger verbundene Haltebasis, wobei die Haltebasis eine Flanscheinheit zur Aufnahme der Lagereinheit sowie zwei sich von der Flanscheinheit ausgehende und dabei im Abstand zueinander verlaufende Halteelemente aufweist, die an dem Querträger angreifen.

Derartige Anhängekupplungen sind aus dem Stand der Technik, beispielsweise der EP 2 006 192 bekannt.

Bei diesen Anhängekupplungen besteht das Problem, dass die Haltebasis möglichst stabil und kostengünstig herzustellen sein soll.

Diese Aufgabe wird bei einer Anhängekupplung der eingangs beschriebenen Art erfindungsgemäß durch die Merkmale des Anspruchs 1. gelöst,
Der Vorteil der erfindungsgemäßen Lösung ist darin zu sehen, dass durch die ausgehend von der Flanscheinheit sich im Abstand zueinander verlaufenden und an dem Querträger angreifenden Halteelemente eine stabile und insbesondere biegesteife sowie kostengünstige Verbindung zwischen der Lagereinheit und Querträger möglich ist.

Prinzipiell wäre es denkbar, die Haltebasis aus der Flanscheinheit und den Halteelementen zusammenzusetzen.

Hinsichtlich der Herstellung der erfindungsgemäßen Lösung ist es besonders vorteilhaft, dass die Haltebasis durch zwei Elemente aus Flachmaterial gebildet ist, von denen jedes ein Flanschelement umfasst, welches zur Bildung der Flanscheinheit beiträgt, und von denen jede eines der Halteelemente bildet, die sich von der Flanscheinheit ausgehend in Richtung des Querträgers erstrecken.

Die Flanschelemente könnten beispielsweise zur Ausbildung der Flanscheinheit durch Abstandselemente getrennt angeordnet sein.

Besonders günstig ist es dabei, wenn die Flanscheinheit aus den Flanschelementen derart gebildet ist, dass die Flanschelemente mit einander zugewandten Anlageseiten aneinander anliegen.

Eine derartige Lösung hat den Vorteil, dass dadurch aufgrund des Aufbaus der Flanscheinheit aus zwei Flanschelementen in einfacher Weise eine stabile Flanscheinheit herstellbar ist.

Dadurch, dass jedes der Halteelemente fest mit dem jeweiligen Flanschelement verbunden ist, ist die stabile Verbindung zwischen dem Querträger und dem jeweiligen Flanschelement hergestellt.

Dabei könnten die Halteelemente durch Formschluss oder Fügen mit dem jeweiligen Flanschelement verbunden sein.

Eine besonders vorteilhafte Lösung sieht vor, dass jedes der Halteelemente einstückig in das jeweilige Flanschelement übergeht, so dass dadurch jedes Halteelement mit dem dazugehörigen Flanschelement besonders einfach und somit kostengünstig herstellbar ist.

Vorzugsweise ist jedes der Halteelemente relativ zum entsprechenden Flanschelement so angeordnet, dass es über einen Biegebereich in das jeweilige Flanschelement übergeht.

Hinsichtlich der Ausrichtung der Halteelemente relativ zueinander wurden bislang noch keine Angaben gemacht.

So sieht eine besonders günstige Lösung vor, dass die Halteelemente mit zunehmendem Abstand von der Flanscheinheit in zunehmendem Abstand voneinander verlaufen.

Eine bevorzugte Lösung sieht vor, dass die jeweiligen Halteelemente sich mit zunehmender Erstreckung von der Flanscheinheit weg in zunehmendem Abstand von einer Mittelebene der Flanscheinheit erstrecken.

Vorzugsweise ist die Mittelebene der Flanscheinheit dadurch definiert, dass diese die geometrische Ebene ist, die zwischen den, beispielsweise aneinander anliegenden, Flanschelementen in der Flanscheinheit verläuft.

Die erfindungsgemäße Lösung sieht vor, dass die Halteelemente relativ zu den entsprechenden Flanschelementen längs einer Biegelinie umgebogen sind, so dass damit ein Verlauf der Halteelemente relativ zur Mittelebene entsteht, bei welchem sich die Halteelemente ausgehend von der Biegelinie mit zunehmender Erstreckung von der Biegelinie weg auch in zunehmendem Abstand von der Mittelebene erstrecken.

Im einfachsten Fall sind sowohl das Flanschelement als auch das Halteelement aus einem ebenen Stück Flachmaterial gebildet und verlaufen dadurch in einem Winkel zueinander.

Dabei verlaufen in einem besonders einfachen Fall die Halteelemente in einem spitzen Winkel zu einer Mittelebene der Flanscheinheit.

Bei der erfindungsgemäßen Lösung schließen das Halteelement und das jeweilige Flanschelement des jeweiligen Elements einen stumpfen Winkel miteinander ein.

Beispielsweise ist hierbei vorgesehen, dass der stumpfe Winkel zwischen dem Halteelement und dem jeweiligen Flanschelement im Bereich zwischen 100 Grad und 170 Grad liegt und vorzugsweise im Bereich zwischen 120 Grad und 160 Grad liegt.

Um eine möglichst optimale Stabilität zu erhalten ist erfindungsgemäß vorgesehen, dass die Projektion der Biegelinien der Elemente auf die Mittelebene einen sich schneidenden Verlauf der projizierten Biegelinien ergibt, das heißt, dass die auf die Mittelebene projizierten Biegelinien quer zueinander verlaufen.

Insbesondere ist dabei vorgesehen, dass die projizierten Biegelinien einen spitzen Winkel miteinander einschließen, der beispielsweise im Bereich zwischen 15 Grad und 140 Grad liegt und vorzugsweise im Bereich zwischen 40 Grad und 100 Grad liegt.

Dadurch, dass die projizierten Biegelinien in der Mittelebene quer zueinander verlaufen, ist die sich aus den beiden Elementen mit den Flanschelementen und den Halteelementen ergebende Haltebasis besonders biege- und verwindungssteif, da jeweils das eine der Elemente einem biegeelastischen Verhalten des anderen der Elemente entgegenwirkt.

Hinsichtlich der Verbindung zwischen den Halteelementen und dem Querträger wurden bislang keine näheren Angaben gemacht.

Prinzipiell wäre es denkbar, die Halteelemente beispielsweise mit dem Querträger zu verschrauben oder zu verkleben.

Eine besonders günstige Lösung sieht jedoch vor, dass die Halteelemente mit dem Querträger verschweißt sind.

Eine stabile Verbindung zwischen den Halteelementen und dem Querträger ist insbesondere dann erreichbar, wenn die Halteelemente an einer Außenumfangsfläche des Querträgers anliegen.

Insbesondere sind dabei die Halteelemente mit Querträgeraufnahmen versehen, die an der Außenumfangsfläche des Querträgers anliegen.

Die Querträgeraufnahmen sind vorzugsweise als in den Halteelementen vorgesehene Ausschnitte ausgeführt, so dass sich die Halteelemente im Bereich der Querträgeraufnahmen quer zu dem Querträger, insbesondere in einem von 90° abweichenden Winkel, erstrecken.

Insbesondere sind die Querträgeraufnahmen durch die Ausschnitte begrenzende Randkonturen der Halteelemente gebildet, welche an der Außenumfangsfläche des Querträgers anliegen.

Dabei könnten theoretisch die Querträgeraufnahmen in einzelnen Abschnitten an der Außenumfangsfläche des Querträgers anliegen.

Eine besonders vorteilhafte Lösung sieht jedoch vor, dass die Querträgeraufnahmen längs ihrer Randkonturen an der Außenumfangsfläche anliegen.

Um dabei eine stabile Verbindung zum Querträger zu schaffen, ist vorzugsweise vorgesehen, dass die Querträgeraufnahmen die Außenumfangsfläche des Querträgers über einen Winkelbereich von mindestens 120° bezogen auf eine Mittelachse des Querträgers umfassen.

Vorzugsweise ist vorgesehen, dass die Querträgeraufnahmen die Außenumfangsfläche des Querträgers über einen Winkel von mindestens 150 Grad, noch besser von mindestens 180 Grad, umfassen.

Ferner sind vorzugsweise die Querträgeraufnahmen längs ihrer Randkontur linienförmig mit dem Querträger verschweißt.

Eine besonders stabile Ausführungsform der Haltebasis sieht vor, dass die Querträgeraufnahmen an den Halteelementen in Bereichen mit dem größten Abstand voneinander angeordnet sind.

Weitere Merkmale und Vorteile der Erfindung sind Gegenstand der nachfolgenden Beschreibung sowie der zeichnerischen Darstellung eines Ausführungsbeispiels.

In der Zeichnung zeigen:
- Fig. 1: eine perspektivische teilweise aufgebrochene Ansicht eines Kraftfahrzeugs mit einer erfindungsgemäßen Anhängekupplung;
- Fig. 2: eine perspektivische Darstellung eines ersten Ausführungsbeispiels der erfindungsgemäßen Anhängekupplung;
- Fig. 3: eine Ansicht der Anhängekupplung in Richtung des Pfeils A in Fig. 2;
- Fig. 4: eine Ansicht in Richtung des Pfeils B in Fig. 2;
- Fig. 5: eine Ansicht in Richtung eines Pfeils C in Fig. 2 und in der Arbeitsstellung;
- Fig. 6: eine Ansicht eines Querträgers mit einer Haltebasis in Richtung des Pfeils D in Fig. 2;
- Fig. 7: einen Schnitt längs Linie 7-7 in Fig. 6;
- Fig. 8: eine vergrößerte Ansicht der Haltebasis in Richtung des Pfeils E in Fig. 6;
- Fig. 9: eine vergrößerte Ansicht der Haltebasis in Richtung des Pfeils F in Fig. 8;
- Fig. 10: eine Ansicht der Haltebasis in Richtung des Pfeils G in Fig. 9;
- Fig. 11: einen Schnitt längs Linie 11-11 in Fig. 10 und

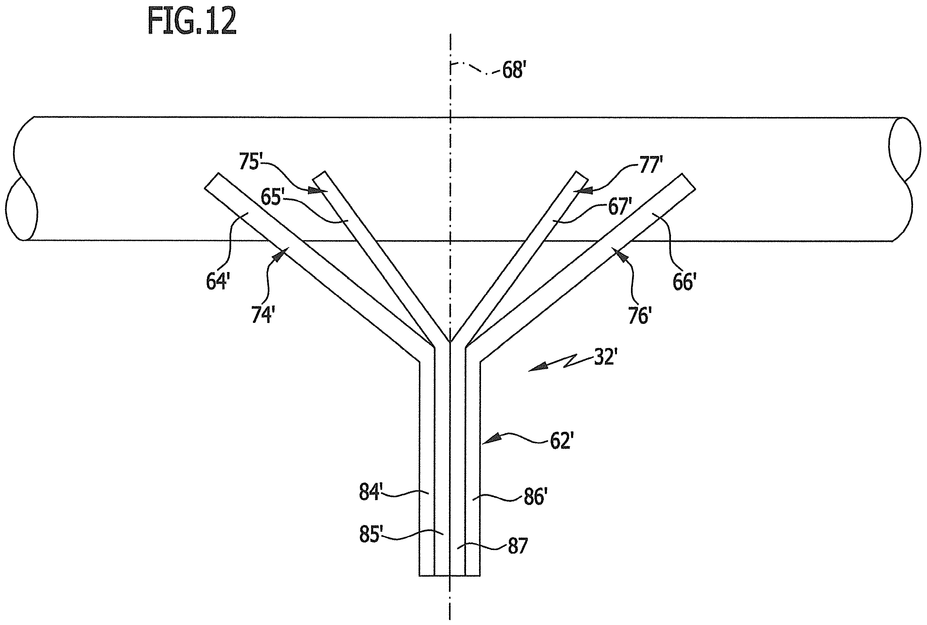

- Fig. 12: eine Draufsicht auf die Haltebasis und den diesen tragenden Teils des Querträgers bei einem zweiten Ausführungsbeispiel.

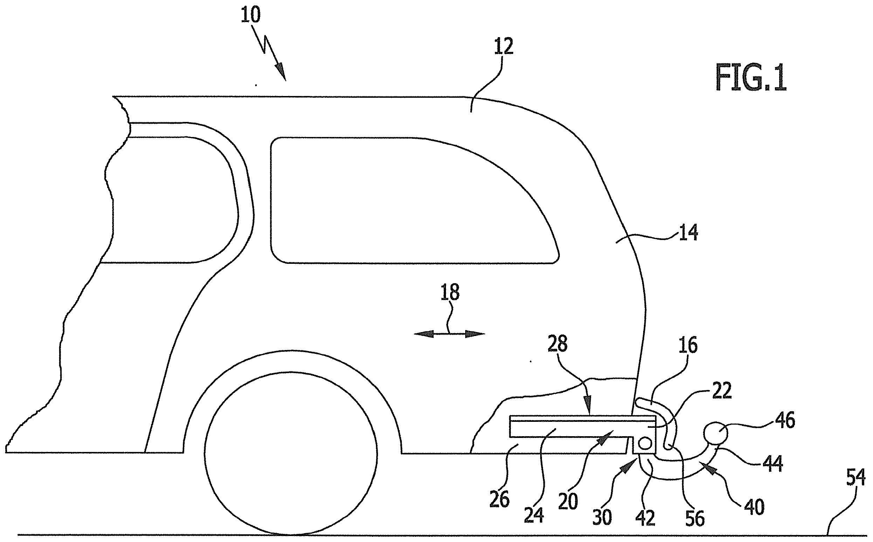

Ein in Fig. 1 als Ganzes mit 10 bezeichnetes Kraftfahrzeug umfasst eine Fahrzeugkarosserie 12, an welcher an einem Heckbereich 14 eine erfindungsgemäße Anhängekupplung 20 montiert ist, welche einen von einer Stoßfängereinheit 16 abgedeckten und sich quer zu einer Längsrichtung 18 der Fahrzeugkarosserie 12 und quer über dem Heckbereich 14 erstreckenden Querträger 22 sowie sich ungefähr parallel zur Längsrichtung 18 der Fahrzeugkarosserie 12 entlang von Karosseriewandabschnitten 26 erstreckende und an diesen fixierte Seitenträger 24 aufweist, die zusammen mit dem Querträger 22 eine Halteeinheit 28 bilden, welche zum Teil durch die Fahrzeugkarosserie 12 und zum Teil durch die Stoßfängereinheit 16 abgedeckt ist.

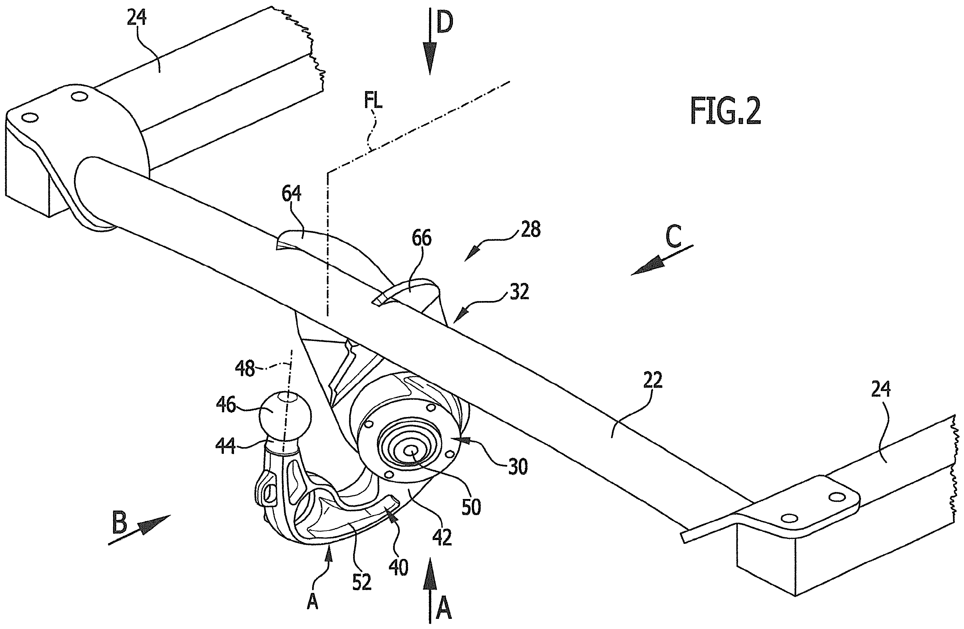

An der Halteeinheit 28 ist eine Haltebasis 32 einer als Ganzes mit 30 bezeichneten Lagereinheit, nämlich eine Schwenklagereinheit, vorgesehen, mit welcher ein als Ganzes mit 40 bezeichneter Kugelhals mit einem ersten Ende 42 verbunden ist, der außerdem an einem zweiten Ende 44 eine mit 46 bezeichnete Kupplungskugel trägt, wie in Fig. 1 und 2 dargestellt.

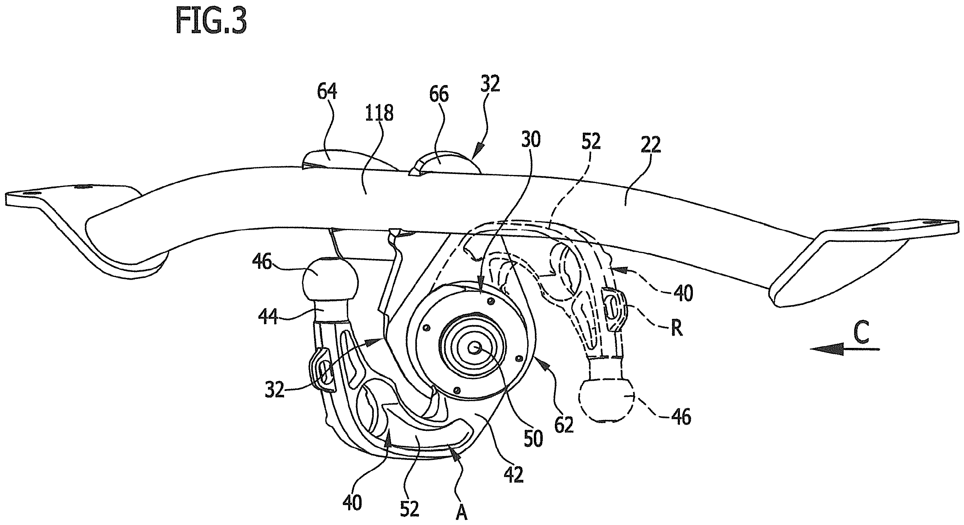

Durch die Schwenklagereinheit 30 besteht die Möglichkeit, den Kugelhals 40 von einer in Fig. 2 und 3 dargestellten Arbeitsstellung A, in welcher eine Kugelmittelachse 48 der Kupplungskugel 46 in einer zur Längsrichtung 18 parallelen, vertikalen Fahrzeuglängsmittelebene FL steht, um eine quer, insbesondere schräg, vorzugsweise in einem spitzen Winkel zur Fahrzeuglängsmittelebene FL verlaufende Schwenkachse 50 in eine in Fig. 3 dargestellte Ruhestellung R zu verschwenken, in welcher ein Mittelabschnitt 52 des Kugelhalses sich quer zur Fahrzeuglängsmittelebene FL erstreckt und die Kupplungskugel 46 seitlich der Fahrzeuglängsmittelebene FL liegt, wie in Fig. 3 dargestellt.

Insbesondere ist dabei der Kugelhals 40 in der Ruhestellung R in einer durch die Stoßfängereinheit 16 der Fahrzeugkarosserie 12 abgedeckten Stellung seitlich der Fahrzeuglängsmittelebene FL angeordnet.

Bei einer derartigen Ausrichtung der Schwenkachse 50 besteht insbesondere die Möglichkeit, den Kugelhals 40 auf einer einer Fahrbahn 54 abgewandten Seite der Kupplungskugel 46 in der Ruhestellung anzuordnen, wie in Fig. 3 gestrichelt dargestellt.

Zumindest besteht die Möglichkeit, den Kugelhals 40 in der Ruhestellung in einem derartigen Abstand von der Fahrbahn 54 anzuordnen, dass er höher liegt als eine Unterkante 56 der Stoßfängereinheit 16, bezogen auf den Verlauf der Fahrbahn 54.

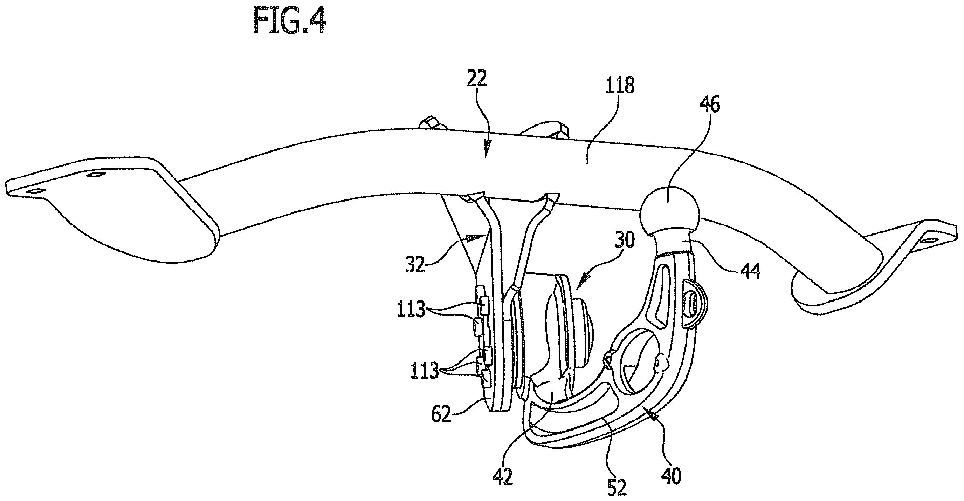

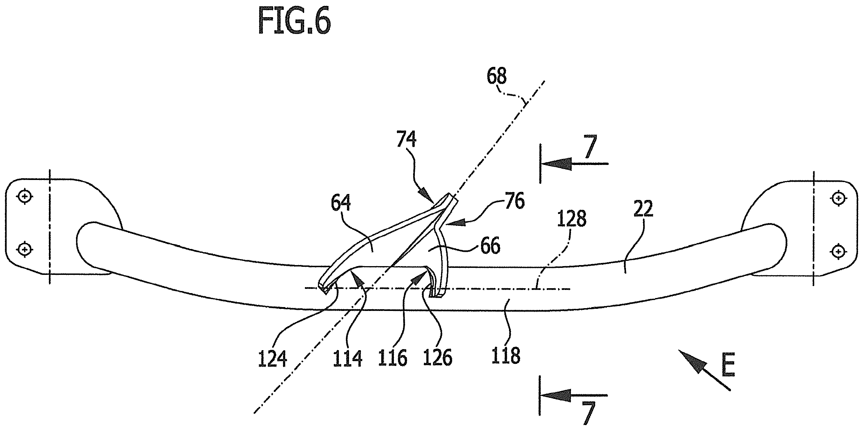

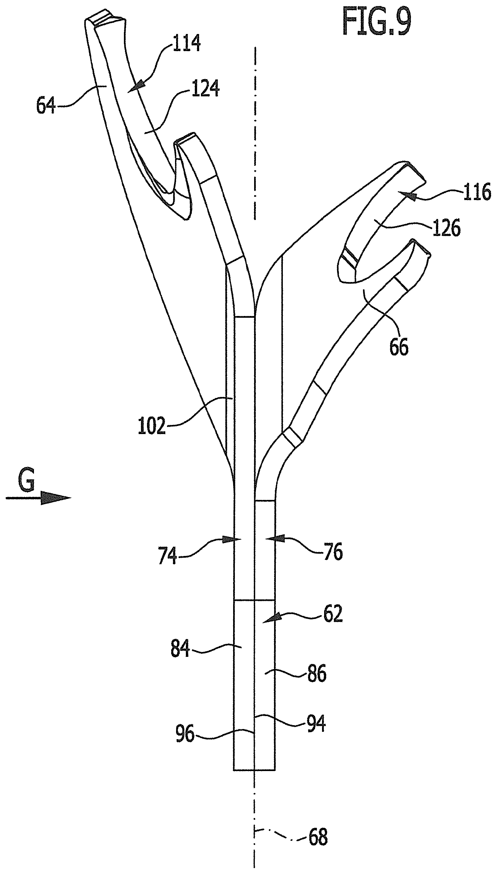

Wie in den Fig. 3 bis 11 dargestellt, umfasst die Haltebasis 32 eine Flanscheinheit 62, auf welcher die Schwenklagereinheit 30 montiert ist, sowie sich von der Flanscheinheit 62 ausgehend erstreckende Halteelemente 64 und 66, die wie in den Fig. 3 bis 11 dargestellt, sich ausgehend von der Flanscheinheit 62 sich zunehmend voneinander weg erstrecken und insbesondere ausgehend von einer geometrischen Mittelebene 68 der Flanscheinheit 62 mit zunehmendem Abstand von der Flanscheinheit 62 in zunehmendem Abstand von der Mittelebene 68 verlaufen, wie in den Fig. 6 und 9 dargestellt.

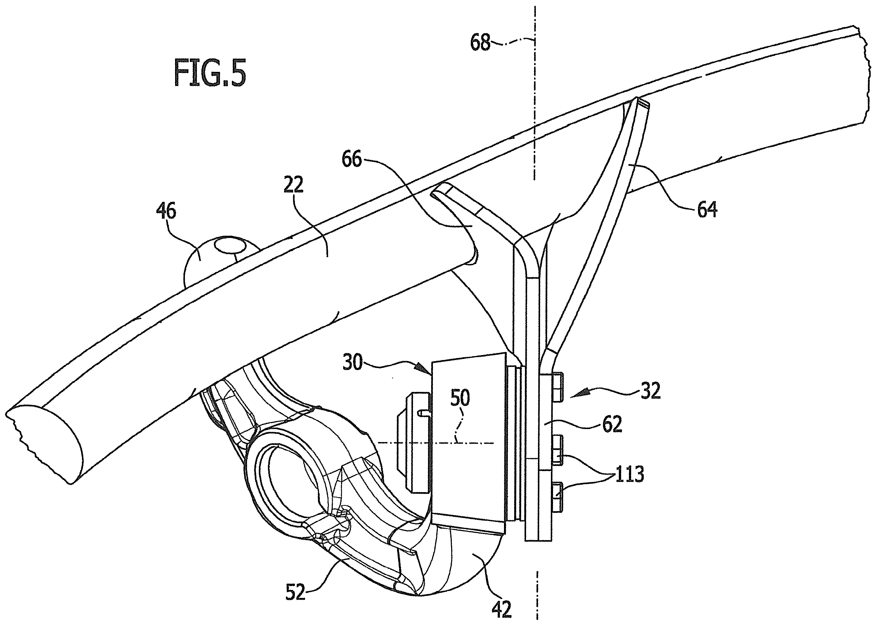

Vorzugsweise verläuft, wie in Fig. 5 und 6 dargestellt, die geometrische Mittelebene 68, wie in Fig. 6 dargestellt, schräg zu einer Mittelachse 128 des Querträgers 22 in dem die Haltebasis 32 tragenden Bereich des Querträgers 22.

Insbesondere ist dabei die Haltebasis 32 gebildet durch zwei Elemente 74 und 76 aus Flachmaterial, die zwei Flanschelemente 84 und 86 aufweisen, welche mit einander zugewandten Anlageseiten 94 und 96 beispielsweise aneinander anliegen, wobei die Anlageseiten 94 und 96 jeweils an die Mittelebene 68 der Flanscheinheit 62 angrenzen, so dass beide Anlageseiten 94 und 96 letztlich angrenzend an die geometrische Mittelebene 68 angeordnet sind.

Ausgehend von dem Flanschelement 84 umfasst das Element 74 das Halteelement 64, welches relativ zum Flanschelement 84 längs einer Biegelinie 104 gebogen ist und sich somit ausgehend von der Biegelinie 104 in einem Winkel zur Mittelebene 68 und mit zunehmendem Abstand von der Biegelinie 104 mit zunehmendem Abstand von der Mittelebene 68 verläuft.

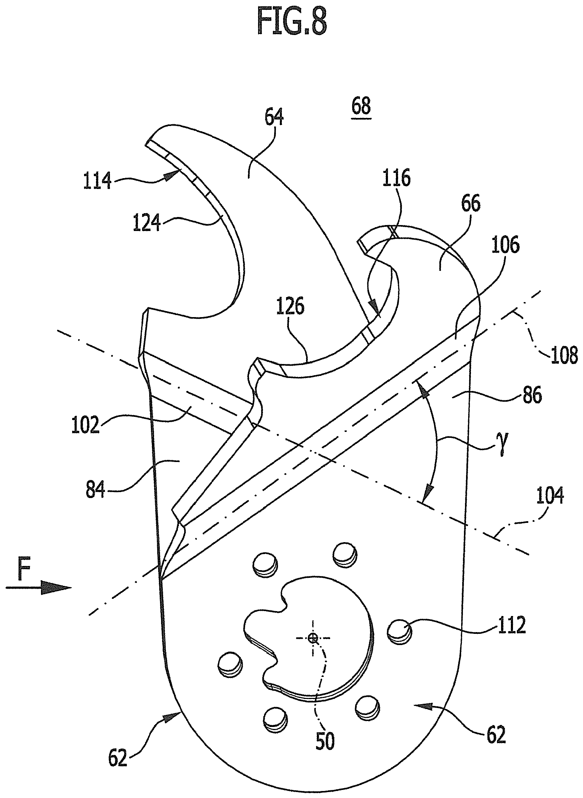

Vorzugsweise ist dabei das Halteelement 64 ebenfalls ein Teil aus dem Flachmaterial, aus welchem das Element 74 gebildet ist, so dass - wie in Fig. 8 bis 11 dargestellt - das Flanschelement 84 und das Halteelement 64 jeweils Flachmaterialteile sind, die über einen durch die Biegelinie 104 vorgegebenen Biegebereich 102 einstückig ineinander übergehen, wobei die Flachmaterialteile einen stumpfen Winkel α miteinander einschließen, der im Bereich von 100 Grad bis 170 Grad liegt.

Der spitze Winkel β, in welchem das Halteelement 64 relativ zu der Anlageseite 94 und somit zur Mittelebene 68 verläuft, liegt im Bereich von 10 Grad bis 80 Grad, vorzugsweise im Bereich von 20 Grad bis 60 Grad.

Auch das Halteelement 66 ist - wie in Fig. 8 und 9 dargestellt - Teil des Elements 76, welches das Flanschelement 86 umfasst relativ zu welchem das Halteelement 66 ausgehend von einer Biegelinie 106 in einem Winkel verläuft.

Das Element 76 ist ebenfalls aus Flachmaterial gebildet, wobei das Flanschelement 86 und das Halteelement 66 über einen durch die Biegelinie 106 vorgegebenen Biegebereich 108 ineinander übergehen und die Flachmaterialteile einen stumpfen Winkel miteinander einschließen, der ebenfalls im Bereich von 100 Grad bis 170 Grad liegt.

Insbesondere verläuft das Halteelement 66 relativ zu der Anlageseite 96 des Flanschelements 66 ausgehend von der Biegelinie 106 in einem Winkel, der im Bereich von 10 Grad bis 80 Grad liegt, vorzugsweise im Bereich von 20 Grad bis 60 Grad.

Somit verläuft ebenfalls das Halteelement 66 ausgehend von der Biegelinie 106 in einem spitzen Winkel relativ zur Mittelebene 68.

Wie aus der Projektion gemäß Fig. 8 ersichtlich, verlaufen die Biegelinien 104 und 106 nicht parallel zueinander, sondern deren Projektion auf die Mittelebene 68, welche in Fig. 6 die Zeichenebene darstellt, ergibt einen spitzen Winkel γ zwischen den Biegelinien 104 und 106, der im Bereich zwischen 15 Grad und 140 Grad liegt, vorzugsweise im Bereich zwischen 40 Grad und 100 Grad.

Die Flanschelemente 84 und 86 sind ihrerseits mit identisch angeordneten Durchbrüchen 112 versehen, die um die Schwenkachse 50 herum, vorzugsweise auf einer Kreislinie um die Schwenkachse 50, angeordnet sind und dazu dienen, Montageschrauben aufzunehmen, mit welchen die Schwenklagereinheit 30 an der Flanscheinheit 62 montierbar ist.

Prinzipiell wäre es denkbar, die Flanschelemente 84 und 86, beispielsweise durch Punktschweißung oder durch Kleben flächig, miteinander zu verbinden.

Eine derartige Verbindung ist jedoch nicht erforderlich, da die Durchbrüche 112 durchsetzende Schrauben 113 zur Montage der Schwenklagereinheit 30 gleichzeitig auch die beiden Flanschelemente 84 und 86 derart miteinander verspannen, dass diese durch die Montage der Schwenklagereinheit 30 an der Flanscheinheit 62 fest miteinander verbunden werden.

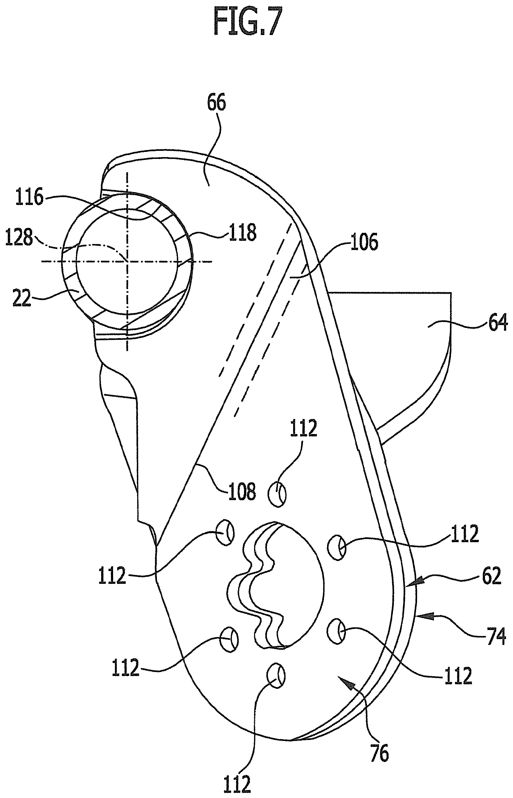

Zur Verbindung mit dem Querträger 22 sind die Halteelemente 64, 66 mit Querträgeraufnahmen 114, 116 versehen (Fig. 7 bis 9), die durch Ausschnitte aus dem die Halteelemente 64, 66 bildenden Flachmaterial hergestellt werden, wobei der Verlauf von durch die Ausschnitte gebildeten Randkonturen 124, 126 der Querträgeraufnahmen 114 und 116 an eine Außenumfangsfläche 118 des Querträgers 22 angepasst ist, an welcher die Querträgeraufnahmen 114 und 116 vorzugsweise mit ihren Randkonturen 124 und 126 linienförmig anliegen, und entlang den linienförmig anliegenden Randkonturen 124 und 126 mit dem Querträger 22 verschweißt werden, wobei vorzugsweise eine linienförmige Schweißverbindung entsteht.

Vorzugsweise sind die Querträgeraufnahmen 114 und 116 so ausgebildet, dass diese, wie in Fig. 6 und 7 dargestellt, die Außenumfangsfläche 118 des Querträgers 22 in einem Umfangsbereich umfassen, welcher sich über mehr als einen Winkelbereich von 120 Grad um eine Mittelachse des Querträgers, vorzugsweise ein Winkelbereich von mehr als 150 Grad um die Mittelachse 128 des Querträgers 22 erstreckt.

Die erfindungsgemäße Haltebasis 32 erlaubt durch die auseinandergespreizt zueinander verlaufenden Halteelemente 64 und 66 eine stabile und insbesondere biegesteife Verbindung zwischen der Haltebasis 32 und dem Querträger 22 und ist außerdem einfach dadurch herstellbar, dass sie zwei Elemente 74 und 76 aus einem plattenförmigen Flachmaterial umfasst, bei denen jeweils das Halteelement 64, 66 relativ zum die Flanscheinheit 62 bildenden Flanschelement 84 und 86 längs einer Biegelinie 104, 106 abgebogen ist, um einerseits bei beispielsweise miteinander zur Flanscheinheit 62 verbundenen, aneinander anliegenden Flanschelementen 84 und 86 den sich aufspreizenden Verlauf der Halteelemente 84 und 86 zu erhalten.

Bei einem zweiten Ausführungsbeispiel einer erfindungsgemäßen Anhängekupplung umfasst die Haltebasis 32' eine Flanscheinheit 62', die aus mehr als zwei, beispielsweise vier, Elementen 74', 75', 76' und 77' aus Flachmaterial ausgebildet ist, wobei jedes der Elemente 74' bis 77' ein Halteelement 64', 65', 66' und 67' sowie ein entsprechendes Flanschelement 84', 85', 86', 87' aufweist.

Alle Flanschelemente 84', 85', 86', 87' verlaufen parallel zur Mittelebene 68' und liegen insbesondere flächig aneinander an, um die Flanscheinheit 62' zu bilden, die die Lagereinheit 30 trägt.

Die Halteelemente 64', 65', 66' und 67' schließen mit den Flanschelementen 84', 85', 86', 87' einen stumpfen Winkel ein.

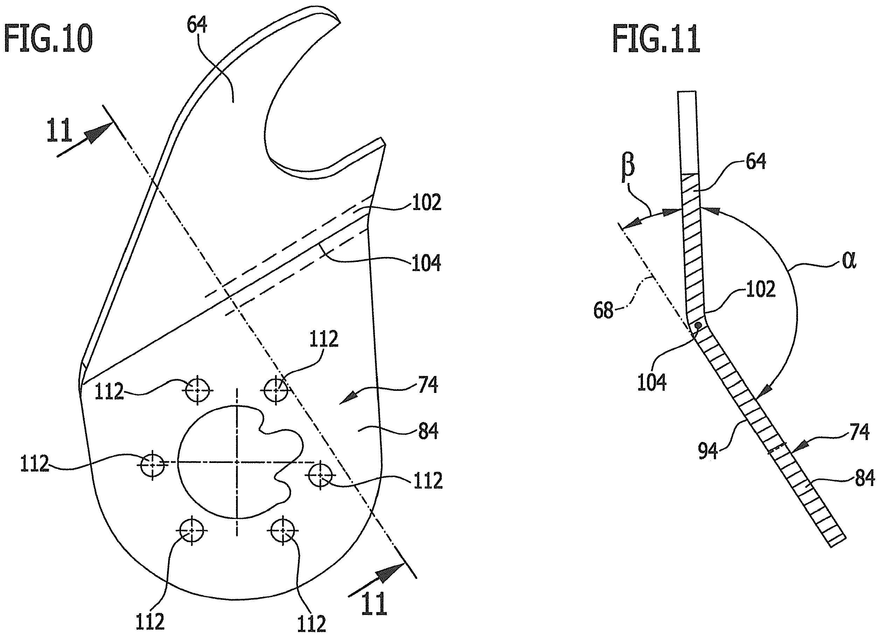

Insbesondere verlaufen auch bei dem zweiten Ausführungsbeispiel, wie in Fig. 11 dargestellt, die Halteelemente 64', 65', 66', 67' mit zunehmendem Abstand von der Flanscheinheit 62' in zunehmendem Abstand voneinander.

Im Übrigen sind bei dem zweiten Ausführungsbeispiel diejenigen Merkmale, die nicht gesondert erwähnt wurden mit denen des ersten Ausführungsbeispiels identisch oder ähnlich, so dass auf die Ausführungen zum ersten Ausführungsbeispiel vollinhaltlich Bezug genommen werden kann.

## Patentansprüche

1. Anhängekupplung für Kraftfahrzeuge, umfassend einen mit einer Kraftfahrzeugkarosserie (12) verbindbaren Querträger (22) und eine Lagereinheit (30), welche einen Kugelhals (40) trägt, der an einem ersten Ende (42) mit der Lagereinheit (30) verbunden ist und an einem zweiten Ende (44) eine Kupplungskugel (46) trägt, und eine die Lagereinheit (30) tragende und mit dem Querträger (22) verbundene Haltebasis (32), wobei die Haltebasis (32) eine Flanscheinheit (62) zur Aufnahme der Lagereinheit (30) sowie zwei sich von der Flanscheinheit (62) ausgehende und dabei im Abstand zueinander verlaufende Halteelemente (64, 66) aufweist, die an dem Querträger (22) angreifen, wobei die Haltebasis (32) durch zwei Elemente (74, 76) aus Flachmaterial gebildet ist, von denen jedes ein Flanschelement (84, 86) umfasst, welches zur Bildung der Flanscheinheit (62) beiträgt, und von denen jede eines der Halteelemente (64, 66) bildet, die sich von der Flanscheinheit (62) ausgehend in Richtung des Querträgers (22) erstrecken und wobei jedes der Halteelemente (64, 66) fest mit dem jeweiligen Flanschelement (84, 86) verbunden ist, wobei die Halteelemente (64, 66) relativ zu den entsprechenden Flanschelementen (84, 86) längs einer Biegelinie (104, 106) umgebogen sind, wobei das Halteelement (64, 66) und das jeweilige Flanschelement (84, 86) des jeweiligen Elements (74, 76) einen stumpfen Winkel miteinander einschließen,
**dadurch gekennzeichnet, dass** die Lagereinheit (30) eine Schwenklagereinheit (30) ist, welche auf der Flanscheinheit (62) montiert ist, dass die Projektion der Biegelinien (104, 106) der Elemente (74, 76) auf die Mittelebene (68) einen sich schneidenden Verlauf der projizierten Biegelinien (104', 106') ergibt.

2. Anhängekupplung nach Anspruch 1, **dadurch gekennzeichnet, dass** die Flanscheinheit (62) aus den Flanschelementen (84, 86) derart gebildet ist, dass die Flanschelemente (84, 86) mit einander zugewandten Anlageseiten (94, 96) aneinander anliegen.

3. Anhängekupplung nach Anspruch 1 oder 2, **dadurch gekennzeichnet, dass** jedes der Halteelemente (64, 66) einstückig in das jeweilige Flanschelement (84, 86) übergeht.

4. Anhängekupplung nach einem der Ansprüche 1 bis 3, **dadurch gekennzeichnet, dass** jedes der Halteelemente (64, 66) relativ zum entsprechenden Flanschelement (84, 86) so angeordnet ist, dass es über einen Biegebereich (102, 108) in das jeweilige Flanschelement (84, 86) übergeht.

5. Anhängekupplung nach einem der voranstehenden Ansprüche, **dadurch gekennzeichnet, dass** die Halteelemente (64, 66) mit zunehmendem Abstand von der Flanscheinheit (62) in zunehmendem Abstand voneinander verlaufen.

6. Anhängekupplung nach einem der voranstehenden Ansprüche, **dadurch gekennzeichnet, dass** die jeweiligen Halteelemente (64, 66) sich mit zunehmender Erstreckung von der Flanscheinheit (62) weg in zunehmendem Abstand von einer Mittelebene (68) der Flanscheinheit (62) erstrecken.

7. Anhängekupplung nach einem der voranstehenden Ansprüche, **dadurch gekennzeichnet, dass** die Halteelemente (64, 66) in einem spitzen Winkel zu einer Mittelebene (68) der Flanscheinheit (68) verlaufen.

8. Anhängekupplung nach einem der voranstehenden Ansprüche, **dadurch gekennzeichnet, dass** der stumpfe Winkel zwischen dem jeweiligen Halteelement (64, 66) und dem jeweiligen Flanschelement (84, 86) im Bereich zwischen 100 Grad und 170 Grad liegt.

9. Anhängekupplung nach einem der voranstehenden Ansprüche, **dadurch gekennzeichnet, dass** die projizierten Biegelinien (104', 106') einen spitzen Winkel miteinander einschließen und dass insbesondere der spitze Winkel im Bereich zwischen 15 Grad und 140 Grad liegt.

10. Anhängekupplung nach einem der voranstehenden Ansprüche, **dadurch gekennzeichnet, dass** die Halteelemente (64, 66) an einer Außenumfangsfläche (118) des Querträgers (22) anliegen.

11. Anhängekupplung nach Anspruch 10, **dadurch gekennzeichnet, dass** die Halteelemente (64, 66) mit Querträgeraufnahmen (114, 116) versehen sind, die an der Außenumfangsfläche (118) des Querträgers (22) anliegen.

12. Anhängekupplung nach einem der voranstehenden Ansprüche, **dadurch gekennzeichnet, dass** die Querträgeraufnahmen (114, 116) als in den Halteelementen (64, 66) vorgesehene Ausschnitte ausgeführt, so dass sich die Halteelemente (64, 66) im Bereich der Querträgeraufnahmen (114, 116) quer zu dem Querträger (22), insbesondere in einem von 90° abweichenden Winkel, erstrecken.

13. Anhängekupplung nach einem der voranstehenden Ansprüche, **dadurch gekennzeichnet, dass** die Querträgeraufnahmen (114, 116) durch Randkonturen der Halteelemente (64, 66) gebildet sind, welche an der Außenumfangsfläche (118) des Querträgers (22) anliegen.

14. Anhängekupplung nach Anspruch 13, **dadurch gekennzeichnet, dass** die Querträgeraufnahmen (114, 116) längs ihrer Randkonturen an der Außenumfangsfläche (118) anliegen.

15. Anhängekupplung nach einem der Ansprüche 11 bis 14, **dadurch gekennzeichnet, dass** die Querträgeraufnahmen (114, 116) die Außenumfangsfläche (118) des Querträgers (22) über einen Winkelbereich von mindestens 120 Grad, bezogen auf eine Mittelachse des Querträgers (22), umfassen und dass insbesondere die Querträgeraufnahmen (114, 116) die Außenumfangsfläche (118) des Querträgers (22) über einen Winkel von mindestens 150°, noch besser von mindestens 180°, umfassen und dass insbesondere die Querträgeraufnahmen (114, 116) längs ihrer Randkontur linienförmig mit dem Querträger (22) verschweißt sind.

## Claims

1. A trailer coupling for motor vehicles, including a cross member (22), which is connectable to a motor vehicle body (12), and a bearing unit (30), which carries a ball neck (40) that at a first end (42) is connected to the bearing unit (30) and at a second end (44) carries a coupling ball (46), and a holding base (32), which carries the bearing unit (30) and is connected to the cross member (22), wherein the holding base (32) has a flange unit (62), for receiving the bearing unit (30), and two holding elements (64, 66) that project from the flange unit (62) and in so doing run at a spacing from one another and act on the cross member (22), wherein the holding base (32) is formed by two elements (74, 76) made from flat material, each of which includes a flange element (84, 86) that contributes to the formation of the flange unit (62), and each of which forms one of the holding elements (64, 66) that extend, projecting from the flange unit (62), in the direction of the cross member (22), and wherein each of the holding elements (64, 66) is firmly connected to the respective flange element (84, 86), wherein the holding elements (64, 66) are bent around along a bend line (104, 106) in relation to the corresponding flange elements (84, 86), wherein the holding element (64, 66) and the respective flange element (84, 86) of the respective element (74, 76) form an obtuse angle with one another, **characterised in that** the bearing unit (30) is a pivotal bearing unit (30) which is mounted on the flange unit (62), **in that** the projection of the bend lines (104, 106) of the elements (74, 76) onto the centre plane (68) results in an intersecting path of the projected bend lines (104', 106').

2. A trailer coupling according to Claim 1, **characterised in that** the flange unit (62) comprising the flange elements (84, 86) is formed such that the flange elements (84, 86) abut against one another by means of mutually facing abutment sides (94, 96).

3. A trailer coupling according to Claim 1 or 2, **characterised in that** each of the holding elements (64, 66) merges in one piece with the respective flange element (84, 86).

4. A trailer coupling according to any one of Claims 1 to 3, **characterised in that** each of the holding elements (64, 66) is arranged in relation to the corresponding flange element (84, 86) such that it merges with the respective flange element (84, 86) by way of a bend region (102, 108).

5. A trailer coupling according to one of the preceding claims, **characterised in that** the holding elements (64, 66) run at an increasing spacing from one another as the spacing from the flange unit (62) increases.

6. A trailer coupling according to one of the preceding claims, **characterised in that** the respective holding elements (64, 66) extend at an increasing spacing from a centre plane (68) of the flange unit (62) as the extent away from the flange unit (62) increases.

7. A trailer coupling according to one of the preceding claims, **characterised in that** the holding elements (64, 66) lie at an acute angle to a centre plane (68) of the flange unit (68).

8. A trailer coupling according to one of the preceding claims, **characterised in that** the obtuse angle between the respective holding element (64, 66) and the respective flange element (84, 86) is in the range between 100 degrees and 170 degrees.

9. A trailer coupling according to one of the preceding claims, **characterised in that** the projected bend lines (104', 106') form an acute angle with one another, and **in that** in particular the acute angle is in the range between 15 degrees and 140 degrees.

10. A trailer coupling according to one of the preceding claims, **characterised in that** the holding elements (64, 66) abut against an outer peripheral surface (118) of the cross member (22).

11. A trailer coupling according to Claim 10, **characterised in that** the holding elements (64, 66) are provided with cross member receptacles (114, 116) that abut against the outer peripheral surface (118) of the cross member (22).

12. A trailer coupling according to one of the preceding claims, **characterised in that** the cross member receptacles (114, 116) take the form of cutouts provided in the holding elements (64, 66) such that in the region of the cross member receptacles (114, 116) the holding elements (64, 66) extend transversely to the cross member (22), in particular at an angle other than 90°.

13. A trailer coupling according to one of the preceding claims, **characterised in that** the cross member receptacles (114, 116) are formed by edge contours of the holding elements (64, 66) that abut against the outer peripheral surface (118) of the cross member (22).

14. A trailer coupling according to Claim 13, **characterised in that** the cross member receptacles (114, 116) abut against the outer peripheral surface (118) along their edge contours.

15. A trailer coupling according to one of Claims 11 to 14, **characterised in that** the cross member receptacles (114, 116) engage around the outer peripheral surface (118) of the cross member (22) over an angular range of at least 120 degrees in relation to a centre axis of the cross member (22), and **in that** in particular the cross member receptacles (114, 116) engage around the outer peripheral surface (118) of the cross member (22) over an angle of at least 150°, and preferably at least 180°, and **in that** in particular the cross member receptacles (114, 116) are welded to the cross member (22) linearly and along their edge contour.

## Revendications

1. Attelage pour véhicules à moteur, comportant une traverse (22) pouvant être reliée à une carrosserie de véhicule à moteur (12) et une unité de support (30), laquelle portant un col porte-boule (40), qui est relié par une première extrémité (42) à l'unité de support (30) et qui porte par une deuxième extrémité (44) une boule d'attelage (46), et une base de retenue (32) portant l'unité de support (30) et reliée à la traverse (22), dans lequel la base de retenue (32) présente une unité bride (62) destinée à loger l'unité de support (30) ainsi que deux éléments de retenue (64, 66) partant de l'unité bride (62) et s'étendant à distance l'un de l'autre, et qui agissent sur la traverse (22), dans lequel la base de retenue (32) est formée par deux éléments (74, 76) composés d'un matériau plat, parmi lesquels chacun comporte un élément bride (84, 86), lequel contribue à former l'unité bride (62), et parmi lesquels chacun forme l'un des éléments de retenue (64, 66) qui s'étendent de l'unité bride (62) en direction de la traverse (22) et dans lequel chacun des éléments de retenue (64, 66) est relié fixement à l'élément bride (84, 86) respectif, dans lequel les éléments de retenue (64, 66) sont repliés par rapport aux éléments bride (84, 86) correspondants le long d'une ligne de pliage (104, 106), dans lequel l'élément de retenue (64, 66) et l'élément bride (84, 86) respectif de l'élément (74, 76) respectif forment ensemble un angle obtus,
**caractérisé en ce que** l'unité de support (30) est une unité palier pivotant (30), laquelle est montée sur l'unité bride (62), que la projection des lignes de pliage (104, 106) des éléments (74, 76) sur le plan médian (68) donne lieu à un tracé sur lequel les lignes de pliage (104', 106') projetées se croisent.

2. Attelage selon la revendication 1, **caractérisé en ce que** l'unité bride (62) est formée des éléments bride (84, 86), de telle sorte que les éléments bride (84, 86) s'appliquent les uns contre les autres par des faces d'appui (94, 96) tournées les unes vers les autres.

3. Attelage selon la revendication 1 ou 2, **caractérisé en ce que** chacun des éléments de retenue (64, 66) est d'une seule pièce avec l'élément bride (84, 86) respectif.

4. Attelage selon l'une quelconque des revendications 1 à 3, **caractérisé en ce que** chacun des éléments de retenue (64, 66) est agencé par rapport à l'élément bride (84, 86) correspondant de manière à passer dans l'élément bride (84, 86) respectif par l'intermédiaire d'une zone de pliage (102, 108).

5. Attelage selon l'une quelconque des revendications précédentes, **caractérisé en ce que** les éléments de retenue (64, 66) s'étendent en s'écartant de plus en plus l'un de l'autre à mesure que croît leur écart par rapport à l'unité bride (62).

6. Attelage selon l'une quelconque des revendications précédentes, **caractérisé en ce que** les éléments de retenue (64, 66) respectifs s'étendent en s'écartant de plus en plus d'un plan médian (68) de l'unité bride (62) à mesure qu'ils s'étendent de plus en plus à distance de l'unité bride (62).

7. Attelage selon l'une quelconque des revendications précédentes, **caractérisé en ce que** les éléments de retenue (64, 66) s'étendent de manière à former un angle aigu avec un plan médian (68) de l'unité bride (68).

8. Attelage selon l'une quelconque des revendications précédentes, **caractérisé en ce que** l'angle obtus entre l'élément de retenue (64, 66) respectif et l'élément bride (84, 86) respectif se situe dans la plage comprise entre 100 degrés et 170 degrés.

9. Attelage selon l'une quelconque des revendications précédentes, **caractérisé en ce que** les lignes de pliage (104', 106') projetées forment ensemble un angle aigu et **en ce qu'**en particulier l'angle aigu se situe dans la plage comprise entre 15 degrés et 140 degrés.

10. Attelage selon l'une quelconque des revendications précédentes, **caractérisé en ce que** les éléments de retenue (64, 66) s'appliquent contre une surface périphérique extérieure (118) de la traverse (22) .

11. Attelage selon la revendication 10, **caractérisé en ce que** les éléments de retenue (64, 66) sont pourvus de logements de traverse (114, 116), qui s'appliquent contre la surface périphérique extérieure (118) de la traverse (22).

12. Attelage selon l'une quelconque des revendications précédentes, **caractérisé en ce que** les logements de traverse (114, 116) sont réalisés sous la forme de découpes ménagées dans les éléments de retenue (64, 66), de sorte que les éléments de retenue (64, 66) s'étendent dans la zone des logements de traverse (114, 116) transversalement à la traverse (22), en particulier selon un angle différent de 90°.

13. Attelage selon l'une quelconque des revendications précédentes, **caractérisé en ce que** les logements de traverse (114, 116) sont formés par des contours marginaux des éléments de retenue (64, 66), lesquels s'appliquent contre la surface périphérique extérieure (118) de la traverse (22).

14. Attelage selon la revendication 13, **caractérisé en ce que** les logements de traverse (114, 116) s'appliquent le long de leurs contours marginaux contre la surface périphérique extérieure (118).

15. Attelage selon l'une quelconque des revendications 11 à 14, **caractérisé en ce que** les logements de traverse (114, 116) entourent la surface périphérique extérieure (118) de la traverse (22) sur toute l'étendue d'une plage angulaire d'au moins 120 degrés, par rapport à un axe médian de la traverse (22), et **en ce qu'**en particulier les logements de traverse (114, 116) entourent la surface périphérique extérieure (118) de la traverse (22) sur un angle d'au moins 150°, mieux encore d'au moins 180°, et **en ce qu'**en particulier les logements de traverse (114, 116) sont soudés à la traverse (22) de manière linéaire le long de leur contour marginal.
